# EUROPÄISCHE PATENTSCHRIFT

(11) **EP 2 770 127 B1**
(45) Veröffentlichungstag und Bekanntmachung des Hinweises auf die Patenterteilung: **02.01.2019**
(21) Anmeldenummer: 13156357.9
(22) Anmeldetag: 22.02.2013
(51) Int. Cl.: E03D 11/14, F21V 33/00

(54) **Montageeinrichtung für einen Sanitärkörper**
Fitting device for a bathroom item
Dispositif de montage pour un corps sanitaire

(43) Veröffentlichungstag der Anmeldung: 27.08.2014
(73) Patentinhaber: Geberit International AG, 8645 Jona (CH)
(72) Erfinder: Kosarnig, Rolf, 8630 Rüti (CH)
(74) Vertreter: Frischknecht, Harry Ralph

(56) Entgegenhaltungen:
- EP-A1- 2 439 348
- EP-A2- 2 281 957
- DE-A1- 2 500 889
- DE-A1-102007 057 214
- DE-U- 7 237 302
- FR-A1- 2 951 204
- JP-A- H0 541 103
- JP-A- 2001 107 426
- US-B1- 8 277 070

## Beschreibung

### TECHNISCHES GEBIET

Die vorliegende Erfindung betrifft eine Montageeinrichtung für einen Sanitärkörper, insbesondere eine Klosettschüssel, ein Urinal oder ein Lavabo, mit einer Beleuchtungseinrichtung nach Anspruch 1.

### STAND DER TECHNIK

Aus dem Stand der Technik sind Montageeinrichtungen für Sanitärkörper bekannt. Beispielsweise zeigt die EP 2 439 348 eine derartige Montageeinrichtung. Die Montageeinrichtung umfasst einen Montagerahmen, welcher mit Dekorelementen verkleidet ist. Nach oben hin ist der Montagerahmen mit einem Dekorelement in der Gestalt eines Deckels abgeschlossen.

Die US 8,277,070 zeigt ein Waschbecken mit einem zum Waschbecken und einem nach aussen gerichteten Lichtstreifen. Weiter zeigt die DE 10 2007 057 214 eine Ablaufrinne, welche sich einem einzigen Lichtstreifen beleuchten lässt. Aus der FR2951204A1, DE2500889A1, EP2281957A2 und JP2001107426A sind weiter Montageeinrichtungen für Sanitärkörper gemäß dem Stand der Technik bekannt.

### DARSTELLUNG DER ERFINDUNG

Ausgehend von diesem Stand der Technik liegt der Erfindung die Aufgabe zugrunde, die Erkennbarkeit einer Montageeinrichtung als solches und die Erkennbarkeit des Zustandes von mit der Montageeinrichtung verbundenen Elementen zu verbessern.

Diese Aufgabe löst der Gegenstand von Anspruch 1. Demgemäss umfasst eine Montageeinrichtung für einen Sanitärkörper ein Montagegestell zur Aufnahme des Sanitärkörpers und eine mit dem Montagegestell in Verbindung stehende Beleuchtungseinheit. Die Beleuchtungseinheit umfasst ein erstes optisches Mittel mit mindestens einer Lichtquelle zur Bereitstellung eines erstens Lichtscheins und mindestens ein zweites oder weiteres optisches Mittel mit mindestens einer Lichtquelle zur Bereitstellung eines zweiten Lichtscheins, wobei die besagten Lichtscheine von der Montageinrichtung abgebbar sind,wobei die Beleuchtungseinheit eine transparente oder transluzente Abdeckung umfasst, wobei die optischen Mittel durch die Abdeckung verdeckt sind und die Lichtscheine durch die Abdeckung abgebbar sind, wobei sich die Abdeckung entlang einer Längsrichtung erstreckt und flächige Bereiche aufweist, wobei das erste optische Mittel im Bereich eines ersten flächigen Bereich angeordnet ist, über welchen ausschliesslich oder hauptsächlich der erste Lichtschein abgegebbar ist und wobei das zweite optische Mittel im Bereich eines zweiten flächigen Bereich angeordnet ist, über welchen ausschliesslich oder hauptsächlich der zweite Lichtschein abgegebbar ist, wobei die flächigen Bereiche winklig zueinander stehenundwobei die Montageeinrichtung weiter einen Deckel umfasst, welcher mit einer Oberseite des Montagegestells mit dem Montagegestell verbindbar ist, dadurch gekennzeichnet, dass der Deckel ein Trägerelement mit Aufnahmestellen zur Aufnahme der Beleuchtungseinheit bzw. der optischen Mittel und ein mit dem Trägerelement verbindbares Verschalungselement aufweist.

Durch die Anordnung von mindestens zwei optischen Mittel, mit welchen jeweils ein Lichtschein abgebbar ist, weist den Vorteil auf, dass unterschiedlich wahrnehmbare Muster bereitstellbar sind. Beispielsweise kann der erste Lichtschein eine Beleuchtung ausgehend von der Montageeinrichtung bereitstellen und der zweite Lichtschein kann dem Benutzer einen Betriebszustand der Montageeinrichtung oder von mit der Montageeinrichtung in Verbindung stehenden Elementen anzeigen.

Das erste optische Mittel ist derart zum zweiten optischen Mittel angeordnet, dass sich der erste Lichtschein und der zweite Lichtschein teilweise, insbesondere nur teilweise, überlagern.

Die Überlagerung hat den Vorteil, dass der Benutzer auf einen Blick Zustände, insbesondere allfällige Fehlerzustände, welche mit dem ersten und dem zweiten optischen Mittel angezeigt werden, ohne weiteres erkennen kann.

Besonders bevorzugt erstreckt sich der erste Lichtschein über die gesamte Breite des Montagerahmens und der zweite Lichtschein erstreckt sich nur einen Teil der Breite des Montagerahmens. Bezüglich der Höhe ist der zweite Lichtschein vorzugsweise grösser als der erste Lichtschein.

Erfindungsgemäß umfasst die Beleuchtungseinheit eine transparente oder teiltransparente oder transluzente Abdeckung, wobei die optischen Mittel durch die Abdeckung verdeckt sind und die Lichtscheine durch die Abdeckung abgebbar sind. Von aussen gesehen sind also die optischen Mittel innerhalb der Montageeinrichtung angeordnet und durch die Abdeckung verdeckt, wobei die Lichtscheine durch die Abdeckung abgebbar sind.

Erfindungsgemäß erstreckt sich die Abdeckung entlang einer Längsrichtung und weist flächige Bereiche auf. Über einen ersten flächigen Bereich wird ausschliesslich oder hauptsächlich der erste Lichtschein abgegeben und über einen zweiten flächigen Bereich wird ausschliesslich oder hauptsächlich der zweite Lichtschein abgegeben, wobei die flächigen Bereiche winklig zueinander stehen. Die ersten optischen Mittel sind im Bereich des ersten flächigen Bereichs und die zweiten optischen Mittel sind im Bereich des zweiten flächigen Bereichs angeordnet. Die Anordnung von den flächigen Bereichen hat den Vorteil, dass die Lichtscheine durch die Abgabe über die unterschiedlichen flächigen Bereich anders wirken und anders wahrnehmbar sind.

Vorzugsweise verlaufen der erste flächige Bereich im eingebauten Zustand in der Vertikalen und der zweite flächige Bereich geneigt zur Vertikalen.

Vorzugsweise umfasst das erste optische Mittel einen Lichtleiter mit mindestens einer Einkoppelstelle und mindestens einer Auskoppelstelle, wobei die Lichtquelle Licht über die Einkoppelstelle in den Lichtleiter einkoppelt und Licht über die Auskoppelstelle zur Bereitstellung des ersten Lichtscheins auskoppelt.

Besonders bevorzugt ist der Lichtleiter stabförmig mit zwei Stirnseiten und mindestens einer vorderen Mantelfläche sowie einer hinteren Mantelfläche ausgebildet, wobei die Stirnseite die Einkoppelstelle darstellt und wobei auf der vorderen und/oder hinteren Mantelfläche mindestens eine, vorzugsweise mehrere Auskoppelstellen, vorhanden sind. Die mehreren Auskoppelstellen sind durch auf den Lichtleiter aufgedruckte opake Bereiche getrennt voneinander bzw. definiert. Durch die Anordnung der opaken Bereiche lässt sich der Lichtverlauf des ersten Lichtscheins anpassen. Die opaken Bereiche sind vorzugsweise Striche, welche beabstandet zueinander aufgedruckt werden.

Vorzugsweise ist die vordere Mantelfläche zur Abdeckung gerichtet. Weiter ist bei Vorhandensein der Auskoppelstellen auf der hinteren Mantelfläche parallel zum Lichtleiter gegenüber dessen hinteren Mantelfläche ein Reflektor angeordnet, welcher Licht, das über die hintere Mantelfläche austritt, zum Lichtleiter hin reflektiert.

Besonders bevorzugt erstreckt sich der Lichtleiter im Wesentlichen über die gesamte Breite der Montageeinrichtung. Hierdurch erstreckt sich der erste Lichtschein ebenfalls über die gesamte Breite der Montageeinrichtung, wodurch eine besonders gute Ausleuchtung bei Dunkelheit in einem Raum bereitstellbar ist.

Vorzugsweise umfasst das zweite optische Mittel einen Reflektor mit einer Reflektoroberfläche, wobei die zweite Lichtquelle das Licht auf die Reflektoroberfläche abgibt, welche dann den zweiten Lichtschein bereitstellt.

Vorzugsweise ist der Reflektor des zweiten optischen Mittels in seiner Länge entlang der Längsrichtung gesehen kürzer ist als der Lichtleiter. Der Lichtschein des zweiten optischen Mittels ist dabei vom Lichtschein des ersten optischen Mittels unterschiedlich.

Besonders bevorzugt ist der Lichtleiter hinter dem ersten flächigen Bereich und der Reflektor des zweiten optischen Mittels hinter dem zweiten flächigen Bereich angeordnet, wobei der Lichtleiter in den ersten flächigen Bereich und der Reflektor in den zweiten flächigen Bereich abstrahlen.

Vorzugsweise umfasst die Beleuchtungseinheit weiter ein Lagerungselement, wobei das erste optische Mittel und/oder das zweite optische Mittel und/oder die Abdeckung am Lagerungselement gelagert ist, wobei das Lagerungselement vorzugsweise die Gestalt eines sich in Längsrichtung erstreckenden Profils aufweist und mit der Abdeckung abschnittsweise in einem flächigen Verbund steht. Mit dem Lagerungselement können die mit dem Lagerungselement in Verbindung stehenden Teile mit der Montageeinrichtung verbunden werden.

Erfindungsgemäß umfasst die Montageeinrichtung weiter einen Deckel, welcher mit einer Oberseite des Montagegestells verbindbar ist, wobei der Deckel ein Trägerelement mit Aufnahmestellen zur Aufnahme der Beleuchtungseinheit und ein mit dem Trägerelement verbindbares Verschalungselement aufweist. Das Verschalungselement kann auch als Dekorelement bezeichnet werden. Das Trägerelement dient der Aufnahme der optischen Mittel, insbesondere über das Lagerungselement.

In einer besonders bevorzugten Weiterbildung den Erfindung bilden das erste optische Mittel und die Abdeckung eine Einheit, welche mit den Aufnahmestellen des Trägerelementes verbindbar ist. Besonders bevorzugt umfasst diese Einheit noch zusätzlich das Lagerungselement. Die Einheit und/oder das Lagerungselement und/oder der Reflektor des zweiten optischen Mittels mit den Aufnahmestellen des Trägerelementes verbindbar.

Vorzugsweise wird die Verbindung über eine Steckverbindung gelöst-

Vorzugsweise umfasst die Beleuchtungseinheit weiter eine Steuerungsvorrichtung, mit welcher die optischen Mittel ansteuerbar sind. Durch die Steuerungsvorrichtung sind insbesondere Zustand, Form, Intensität und/oder Farbe der Lichtscheine steuerbar. Weiter umfasst die Beleuchtungseinheit ein mit der Steuerungseinheit in Verbindung stehender Helligkeitssensor zur Erfassung der Helligkeit in einem Raum, welcher Helligkeitssensor hinter der Abdeckung angeordnet ist. Alternativ oder zusätzlich umfasst die Beleuchtungseinheit weiter ein mit der Steuerungseinheit in Verbindung stehender Anwesenheitssensor, welcher die Anwesenheit einer Person im Raum erfasst. Bei der Anwesenheit einer Person ist das erste und/oder das zweite optische Mittel aktivierbar.

Die Steuereinrichtung kann zudem mit weiteren Funktionselementen an der Montageeinrichtung in Verbindung stehen. Beispielsweise mit einem Ventilator einer Geruchsabsaugung, wobei das erste und/oder das zweite optische Mittel bei eingeschaltetem Ventilator aktivierbar sind.

Vorzugsweise weist die Montageeinrichtung eine Rückseite und eine Vorderseite auf, wobei die Rückseite im eingebauten Zustand gegen eine in der Vertikalen verlaufende Wand gerichtet ist, wobei der erste Lichtschein und der zweite Lichtschein gegen die Wand gerichtet sind, wobei der erste flächige Bereich der Abdeckung winklig zur Rückseite und der zweite flächige Bereich der Abdeckung beabstandet und parallel zur Rückseite bzw. zur Wand verläuft.

Vorzugsweise umfasst die Montageeinrichtung Anschlussrohre und/oder Befestigungselemente für den Anschluss mindestens eines Sanitärkörpers an die Montageeinrichtung. Besonders bevorzugt erstrecken sich die besagten Anschlussrohre und/oder Befestigungselemente von der Vorderseite von der Montageinrichtung weg. Die Befestigungselemente sind beispielsweise Gewindestangen, welche von der Montageeinrichtung weg ragen oder in der Montageeinrichtung vorhandene Profile, in welche der Sanitärkörper einhängbar ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Perspektivansicht einer Sanitäreinrichtung mit einer Beleuchtungseinheit nach einer Ausführungsform der Erfindung;
- Fig. 2: eine perspektivische Explosionsdarstellung der Beleuchtungseinheit nach Figur 1;
- Fig. 3: eine perspektivische Darstellung der Beleuchtungseinheit nach Fig. 1 und 2;
- Fig. 4: eine Draufsicht von zwei optischen Mitteln der Beleuchtungseinheit nach den vorhergehenden Figuren;
- Fig. 5: eine Schnittdarstellung nach Figur 4 im Randbereich;
- Fig. 6: eine Schnittdarstellung nach Figur 4 im mittleren Bereich;
- Fig. 7: eine perspektivische Ansicht eines optischen Mittels;
- Fig. 8a: eine Schnittdarstellung durch die Beleuchtungseinheit nach einer der vorhergehenden Figuren; und
- Fig. 8b: eine vergrösserte Ansicht der Fig. 8a.

### BESCHREIBUNG BEVORZUGTER AUSFÜHRUNGSFORMEN

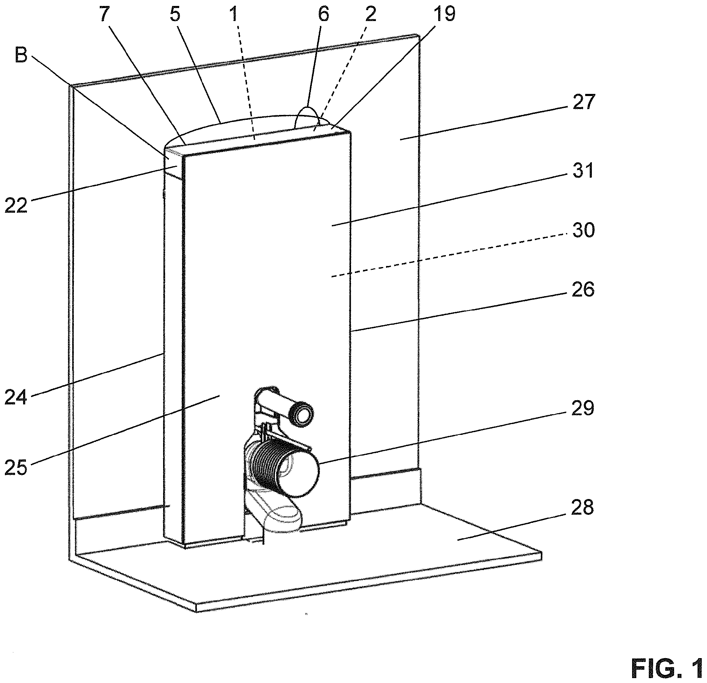

In der Figur 1 wird eine Montageeinrichtung 26 für einen Sanitärkörper gezeigt. Die Montageeinrichtung 26 steht hier vor einer Wand 27 auf einem Boden 28. Die Wand 27 verläuft in der Vertikalen und der Boden 28 in der Horizontalen. Die Montageeinrichtung 26 kann aber auch direkt an der Wand befestigt sein. Im unteren Bereich weist die Montageeinrichtung 26 hier Anschlussrohre und Befestigungselemente 29 für Anschluss eines hier nicht gezeigten Sanitärkörper an die Montageeinrichtung 26 auf. Der Sanitärkörper ist im vorliegenden Fall beispielsweise eine Toilettenschüssel. In alternativen Ausführungsformen kann der Sanitärkörper ein Waschtisch oder ein Urinal sein. Die Anschlussrohre und Befestigungselemente 29 und die Anordnung derselben bezüglich der Montageeinrichtung 26 ist dann entsprechend anzupassen.

Die Montageeinrichtung umfasst hier ein Montagegestell 30 zur mechanischen Aufnahme des Sanitärkörpers. Das Montagegestell 30 wird hier durch Dekorelemente 31, welche das Montagegestell 30 mindestens nach vorne und seitlich vollständig umgeben, bedeckt.

Die Montageeinrichtung 26 kann beispielsweise gemäss der EP 2 439 348 ausgebildet sein. Andere Ausbildungen sind aber auch denkbar.

Die Montageeinrichtung 26 weist eine mit dem Montagegestell in Verbindung stehende Beleuchtungseinheit B auf. Im vorliegenden Beispiel ist die Beleuchtungseinheit B im oberen Bereich der Montageeinrichtung 26 angeordnet. Besonders bevorzugt ist die Beleuchtungseinheit B ein Teil eines Deckels 19, welche die Montageeinrichtung 26 nach oben hin begrenzt.

Die Beleuchtungseinheit B umfasst, wie in der Folge dann noch detailliert erläutert wird, ein erstes optisches Mittel 1 mit mindestens einer Lichtquelle 3 zur Bereitstellung eines ersten Lichtscheins 5 und mindestens ein zweites oder weiteres optisches Mittel 2 mit mindestens einer Lichtquelle 4 zur Bereitstellung eines zweiten Lichtscheins 6. Die besagten Lichtscheine 5, 6 sind von der Montageeinrichtung 26 abgebbar. In der Ausführungsform gemäss der Figur 1 erstreckt sich der erste Lichtschein 5 über die gesamte Breite der Montageeinrichtung 26 und wird von der Montageeinrichtung 26 gegen die Wand 27 abgegeben. Der zweite Lichtschein 6 überlagert hier den ersten Lichtschein 5 teilweise und erstreckt sich nach oben hin über diesen ersten Lichtschein 5 hinaus. Auch der zweite Lichtschein 6 wird gegen die Wand 27 gerichtet. Der Benutzer kann die beiden Lichtscheine 5, 6 also an der Wand 27 wahrnehmen. In anderen Ausführungsformen können auch mehr als das erste und das zweite optische Mittel vorhanden sein, wobei dann entsprechend weitere Lichtscheine bereitgestellt werden.

Die Beleuchtungseinheit B mit dem ersten optischen Mittel 1 und dem zweiten optischen Mittel 2 kann einstückig oder mehrteilig ausgebildet sein. Bei der mehrteiligen Ausbildung lässt sich beispielsweise das erste optische Mittel 1 und das zweite optische Mittel 2 separat zueinander befestigen oder austauschen.

Die optischen Mittel 1, 2 stehen in direktem Kontakt mit der Montageeinrichtung 26 und werden durch diese gelagert. Folglich bilden die Montageeinrichtung 26 und die optischen Mittel 1, 2 eine gemeinsame Einheit.

Das erste optische Mittel 1 ist dabei derart zum zweiten optischen Mittel 2 angeordnet, dass sich der erste Lichtschein 5 und der zweite Lichtschein 6 teilweise überlagern. Der zweite Lichtschein 6 überlagert hier den ersten Lichtschein 5 teilweise. Es gibt also einen Flächenbereich oder einen Raumbereich, welcher sowohl durch den ersten Lichtschein 5 als auch durch den zweiten Lichtschein 6 beleuchtet wird. In einer alternativen Ausführungsform, welche den Figuren nicht dargestellt ist, liegt der erste Lichtschein 5 neben dem zweiten Lichtschein 6.

Im Betrieb können das erste optische Mittel 1 und das weitere optische Mittel 2 gemeinsam oder separat zueinander aktiviert werden. Beispielsweise ist es denkbar, dass mit dem ersten optischen Mittel 1 bei Dunkelheit der Raum beleuchtet wird und dass mit dem zweiten optischen Mittel 2 ein Betriebszustand angezeigt wird.

Mit Bezug auf die Figur 1 kann weiter erkannt werden, dass die Montageeinrichtung eine Rückseite 24 und eine Vorderseite 25 aufweist. Die Rückseite 24 ist im eingebauten Zustand gegen eine in der Vertikalen verlaufende Wand 27 gerichtet. Der erste Lichtschein 5 und der zweite Lichtschein 6 werden ebenfalls gegen die Wand 27 gerichtet. Über die Vorderseite 25 wird der Sanitärkörper an die Montageeinrichtung befestigt.

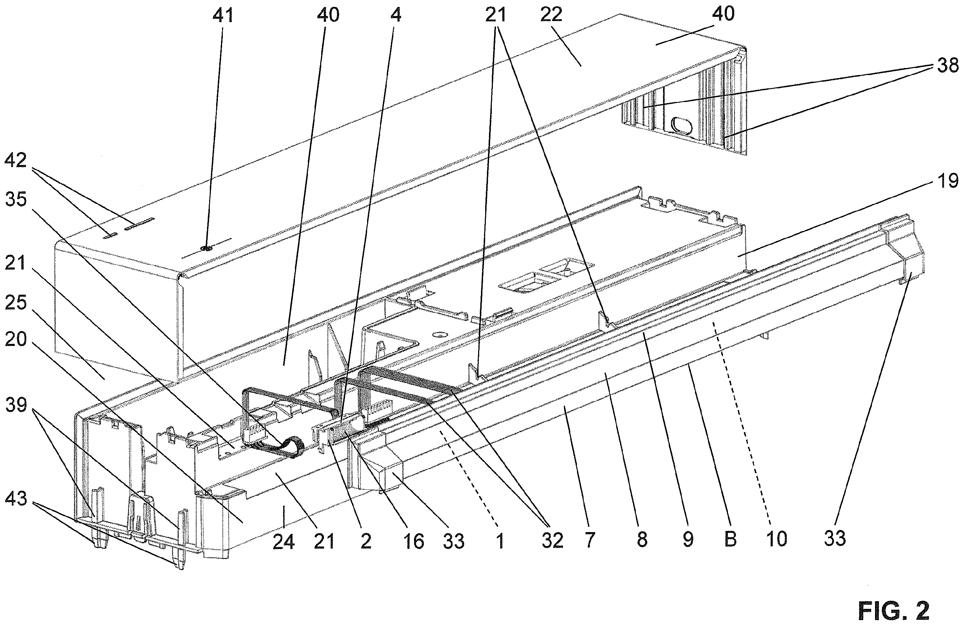

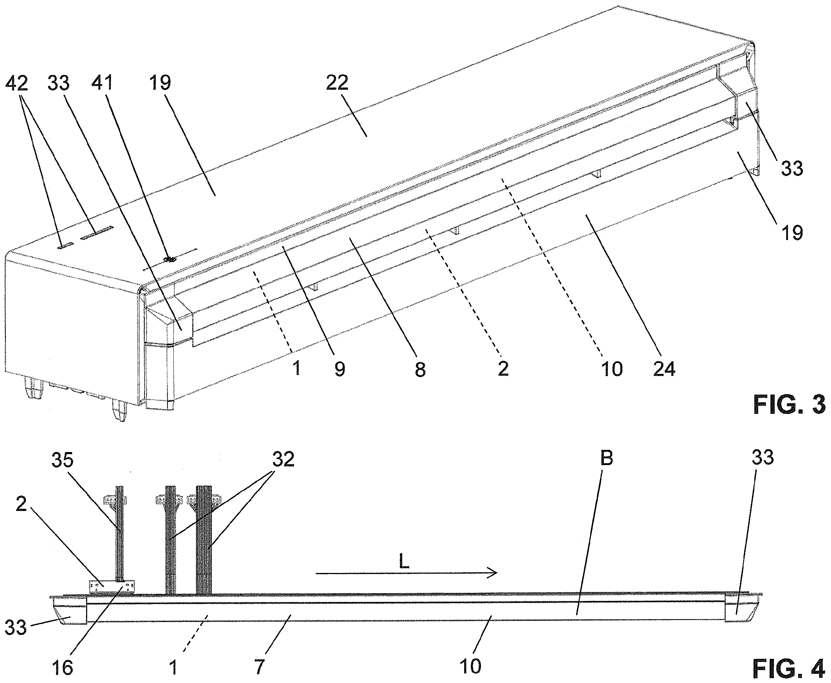

In der Figur 2 wird eine Explosionsdarstellung des Deckels 19 und der Beleuchtungseinheit B gezeigt. Die Beleuchtungseinheit B ist hier am Deckel 19 angeordnet und steht über den Deckel 19 mit der Montageeinrichtung 26 in Verbindung. Die Beleuchtungseinheit B umfasst eine transparente oder teiltransparente bzw. transluzente Abdeckung 7. Die optischen Mittel 1, 2 sind durch diese Abdeckung verdeckt. Im zusammengebauten Zustand liegen die optischen Mittel 1, 2 hinter der Abdeckung 7 im Deckel 19. Die Lichtscheine 5, 6 sind aufgrund der transparenten, teiltransparenten oder transluzenten Eigenschaften der Abdeckung 7 durch die Abdeckung 7 abgebbar. Von der Figur 2 ist das erste optische Mittel 1 nicht direkt erkennbar, weil es hinter der Abdeckung 7 liegt. Beabstandet von dieser Abdeckung 7 wird hier das zweite optische Mittel 2 dargestellt. Im montierten Zustand wird das zweite optische Mittel 2 ebenfalls hinter der Abdeckung 7 liegen. Dies wird in der Figur 3 gezeigt, wo die beiden optischen Mittel beide hinter der Abdeckung 7 liegen und somit von dieser geschützt sind.

In der Figur 4 wird die Beleuchtungseinheit B separat gezeigt, wobei auch hier das erste optische Mittel 1 nach wie vor hinter der Abdeckung 7 liegt. Das zweite optische Mittel 2 ragt abschnittsweise aus der Beleuchtungseinheit B hinter der Abdeckung 7 heraus. Vom ersten optischen Mittel sind lediglich die Anschlusskabel 32 erkennbar. Von der Figur 4 lässt sich gut erkennen, dass sich die Abdeckung 7 entlang einer Längsrichtung L erstreckt und flächige Bereiche 8, 9 aufweist. Das erste optische Mittel 1 ist dabei im Bereich des ersten flächigen Bereichs 8 angeordnet. Über diesen ersten flächigen Bereich 8 ist der erste Lichtschein 5 abgebbar. Je nach Ausbildung ist der erste Lichtschein ausschliesslich über diesen ersten flächigen Bereich 8 abgebbar oder aber nur hauptsächlich. Bei der letzten Ausführungsform werden Teile des Lichtscheins auch über andere Flächen abgegeben. Das zweite optische Mittel 2 ist im Bereich des zweiten flächigen Bereichs 9 angeordnet. Über diesen zweiten flächigen Bereich 9 ist der zweite Lichtschein 6 abgebbar. Der zweite Lichtschein 6 ist dabei gleichermassen wie der erste Lichtschein 5 abgebbar. Die Lichtscheine 5, 6 werden also über zwei unterschiedliche Flächen 8, 9 durch die Abdeckung 7 abgegeben. Im eingebauten Zustand, wie in der Figur 1 gezeigt, verläuft der zweite flächige Bereich 9 in der Vertikalen, also parallel zur Wand 27, und der erste flächige Bereich 8 erstreckt sich geneigt zur Vertikalen.

In der Figur 3 wird der Deckel 19 von hinten gezeigt. Die Rückseite 24 des Deckels 19 bzw. der Montageeinrichtung 26 wird in Kontakt mit der Wand 27 oder in einem geringen Abstand zur Wand 27 angeordnet. Somit liegt der zweite flächige Bereich 9 beabstandet zur Wand 27. Es kann auch gesagt werden, dass durch diese Anordnung der beiden flächigen Bereiche 8, 9 eine Schattenfuge bereitgestellt wird, wobei die beiden Lichtscheine 5, 6 über diese Schattenfuge abgegeben werden.

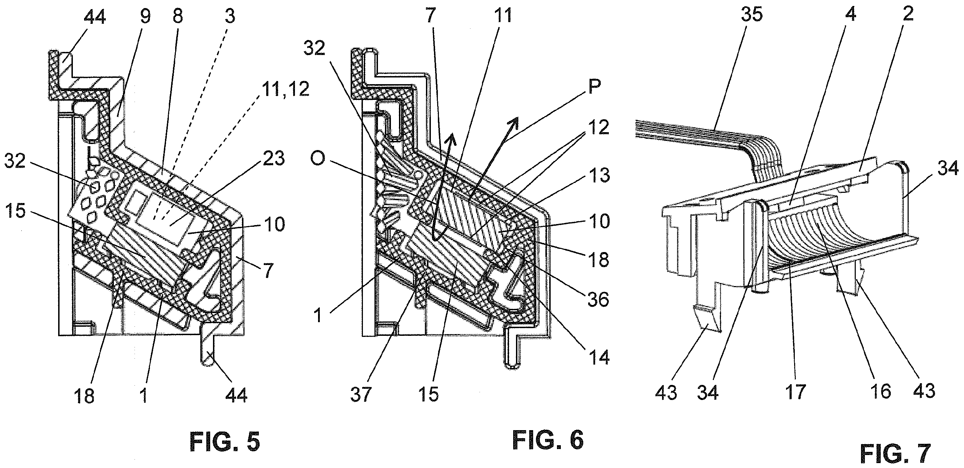

Anhand der Figuren 5 und 6 wird nun das erste optische Mittel 1 der Beleuchtungseinheit B genauer beschrieben. Das erste optische Mittel 1 umfasst einen Lichtleiter 10 mit mindestens einer Einkoppelstelle 11 und mindestens einer Auskoppelstelle 12. Die Lichtquelle 3 koppelt dabei Licht über die Einkoppelstelle 11 in den Lichtleiter 10 ein und über die Auskoppelstelle 11 wird das Licht wieder aus dem Lichtleiter ausgekoppelt, wodurch der erste Lichtschein 5 bereitgestellt wird. Die Lichtquelle 3 wird in der Figur 5 oder 6 nicht direkt gezeigt. Die Lichtquelle 3 ist besonders bevorzugt eine RGB-Leuchtdiode, sodass eine Vielzahl von verschiedenen Farben für den ersten Lichtschein 5 bereitstellbar sind. Die erste Lichtquelle steht über ein Kabel 32 mit einer Steuerung in Verbindung.

Der Lichtleiter 10 ist vorzugsweise stabförmig ausgebildet und umfasst neben den zwei Stirnseiten 11 mindestens eine vordere Mantelfläche 13 und eine hintere Mantelfläche 14. Hier weist der Lichtleiter 10 einen rechteckigen Querschnitt auf. Über eine der beiden oder die beiden Stirnseiten 11 wird das Licht durch die Lichtquelle 3 eingekoppelt. Die Stirnseiten sind also die Einkoppelstellen. Auf der vorderen und/oder der hinteren Mantelfläche 13, 14 ist mindestens eine, vorzugsweise mehrere, Auskoppelstelle(n) 12 vorhanden. Somit kann also Licht über die vordere Mantelfläche 13 und gegebenenfalls über die hintere Mantelfläche 14 abgegeben werden. Die mehreren Auskoppelstellen 12 sind durch auf den Lichtleiter 10 aufgedruckte opake Bereiche voneinander getrennt. Die opaken Bereiche stellen also entsprechende Auskoppelstellen 12 bereit bzw. definieren dieselben.

Die vordere Mantelfläche 13 ist hier zur Abdeckung 7 gerichtet. Über diese vordere Mantelfläche 13 wird das Licht entsprechend dem Pfeil P in der Figur 6 nach vorne zur Abdeckung 7 abgegeben. Bei Vorhandensein der Auskoppelstellen 12 auf der hinteren Mantelfläche 14 wird parallel zum Lichtleiter 10 gegenüber dessen hinteren Mantelfläche 14 ein Reflektor 15 angeordnet. Der Reflektor 15 reflektiert das Licht, das über die hintere Mantelfläche 14 austritt zum Lichtleiter und gibt das Licht dann ebenfalls zur Abdeckung 7 hin ab. Dies wird durch den Pfeil O entsprechend dargestellt.

Der Lichtleiter 10 erstreckt sich im Wesentlichen über die gesamte Breite der Montageeinrichtung 26. Somit lässt sich der Lichtschein 5 gemäss der Figur 1 entsprechend über die gesamte Breite der Montageeinrichtung 26 bereitstellen. Im Wesentlichen über die gesamte Länge ist im vorliegenden Fall so zu verstehen, dass sich der Lichtleiter 10 über eine Wesentliche Breite der Montageeinrichtung 26 erstreckt. Im vorliegenden Fall erstreckt sich der Lichtleiter 10 von einer Seitenabdeckung 33, welche den Abschluss der Abdeckung 7 bereitstellt, zur einer anderen auf der andren Seite liegenden Seitenabdeckung 33.

Die besagte Seitenabdeckung 33 steht hier mit der Abdeckung 7 in Verbindung.

Das zweite optische Mittel 2 wird in der Figur 7 perspektivisch dargestellt. Das zweite optische Mittel 2 umfasst einen Reflektor 16 mit einer Reflektoroberfläche 17. Die zweite Lichtquelle 4 gibt dabei Licht auf die Reflektoroberfläche 17 ab, wodurch das Licht auf der Reflektoroberfläche 17 entsprechend reflektiert wird und der zweite Lichtschein 6 bereitgestellt wird. Seitlich ist der Reflektor 16 bzw. die Reflektoroberfläche 17 durch zwei Seitenteile 34 begrenzt. Die Reflektoroberfläche 17 ist hier gekrümmt ausgebildet, sodass eine entsprechende Lichtausbreitung resultiert. Die zweite Lichtquelle 4 ist vorzugsweise ebenfalls eine RGB-Leuchtdiode, so dass verschiedenste Farben durch die zweite Lichtquelle 4 bereitstellbar sind. Die zweite Lichtquelle 4 steht mit Kabel 35 mit einer Steuerung in Verbindung.

Der Reflektor 16 ist bezüglich seiner Länge entlang der Längsrichtung L gesehen kürzer als der erste Lichtleiter 10 ausgebildet. Dies kann in der Figur 4 entsprechend erkannt werden. Der Reflektor 16 ist hier am linken Ende des Lichtleiters 10 angeordnet und ist Wesentlich kürzer als der Lichtleiter 10.

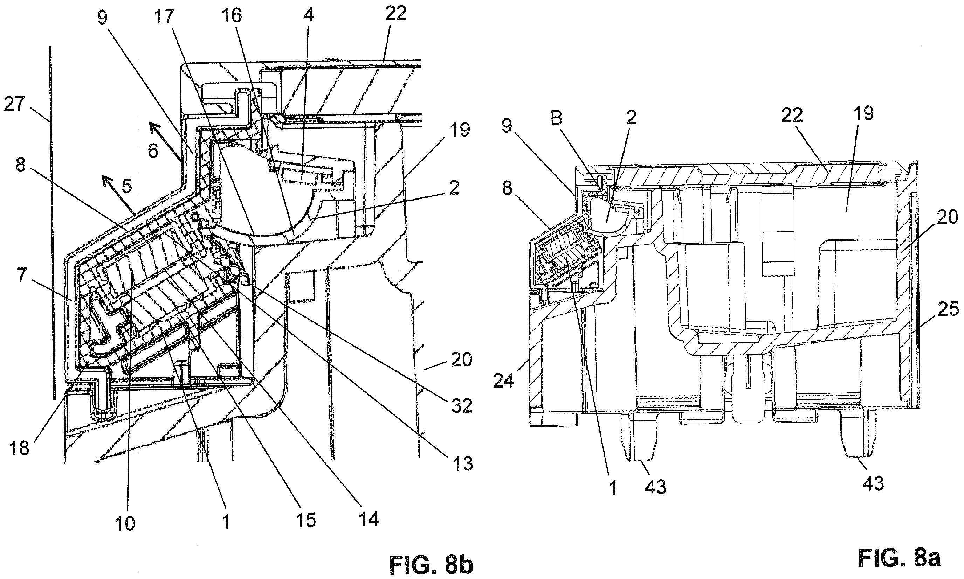

In der Figur 8a wird ein Querschnitt durch den Deckel 19, in welcher die Beleuchtungseinheit B eingebaut ist, gezeigt. Die Figur 8b zeigt eine Detailansicht der Einbausituation nach der Figur 8a.

Von der Figur 8b kann gut erkannt werden, dass der erste Lichtleiter 10 hinter dem ersten flächigen Bereich 8 angeordnet ist. Der erste flächige Bereich 8 verläuft hier geneigt zur Wand 27, welche in der Vertikalen steht. Der Reflektor 16 des zweiten optischen Mittels 2 ist hinter dem flächigen Bereich 9 angeordnet. Der Reflektor 16 des zweiten optischen Mittels 2 strahlt also in den zweiten flächigen Bereich 9 ab. Folglich werden die beiden Lichtscheine in unterschiedliche Richtungen abgegeben.

Die Beleuchtungseinheit B umfasst weiter ein Lagerungselement 18. Das Lagerungselement 18 erstreckt sich ebenfalls entlang der Längsrichtung L und dient in der vorliegenden Ausführungsform der Aufnahme des ersten optischen Mittels 1. Weiter ist die Abdeckung 7 ebenfalls an Lagerungselement 18 angeordnet. In der gezeigten Ausführungsform ist der Lichtleiter 10 in einem U-profilartigen Abschnitt 36 im Lagerungselement 18 gelagert. Der Reflektor 15 liegt in einem dem U-profilartigen Abschnitt 36 anliegenden Abschnitt 37 hinter dem Abschnitt 36 fest. Über das Lagerungselement 18 wird der Lichtleiter 10 und der Reflektor 15 sowie die Abdeckung 7 miteinander verbunden, sodass diese Teile als Einheit entsprechend bereitgestellt wird. Die Einheit sind links und rechts durch entsprechende Seitenabdeckungen 33 begrenzt.

Besonders bevorzugt steht das Lagerungselement 18 im flächigen Verbund mit der Abdeckung 7. Es kann auch gesagt werden, dass das Lagerungselement 18 einen Teil der Abdeckung bildet. Das Lagerungselement 18 ist wie die Abdeckung 7 ebenfalls transparent oder teiltransparent oder transluzent ausgebildet.

Die Seitenabdeckungen 33 können opak, transparent, teiltransparent oder transluzent ausgebildet sind.

Die Montageeinrichtung 26 umfasst, wie bereits erwähnt einen Deckel 19, welcher mit der Oberseite des Montagegestells 30 mit dem Montagegestell 30 verbindbar ist. Hierfür weist der Deckel 19 Befestigungszapfen 43 auf, welche mit dem Montagegestell verbindbar sind. Der Deckel 19 umfasst, wie in der Figur 2 gezeigt, ein Trägerelement 20 mit Aufnahmestellen 21 zur Aufnahme der Beleuchtungseinheit B bzw. von Teilen des ersten optischen Mittels 1 und des zweiten optischen Mittels 2.

Der Reflektor 16 des zweiten optischen Mittels 2 umfasst in der vorliegenden Ausführungsform Rasthaken 43, welche mit einer Aufnahmestelle 21 des Trägerelementes verbindbar sind. Weiter umfasst die Abdeckung Laschen 44, welche ebenfalls in die Aufnahmestellen 21 einsteckbar sind.

Weiter umfasst der Deckel 19 ein mit dem Trägerelement 20 verbindbares Verschalungselement 22. Das Verschalungselement 22 kann auch als Dekorelement 22 bezeichnet werden. Das Verschalungselement 22 erstreckt sich über die gesamte obere Seite der Montageeinrichtung 26 und seitlich über die Höhe des Trägerelementes 20 nach unten. Das Verschalungselement 22 steht über Führungen 38 und entsprechende Gegenstücke 39 mit dem Trägerelement 20 in Verbindung. Weiter dient das Verschalungselement 22 der Aufnahme von Betätigungstasten 42 zur Auslösung einer Vollmengenspülung bzw. einer Teilmengenspülung oder vom Betätigungstasten 41 zur Betätigung eines Ventilators der Geruchsabsaugung.

Weiter umfasst die Beleuchtungseinheit B eine in den Figuren nicht dargestellt Steuerungsvorrichtung, mit welcher die optischen Mittel 1, 2 ansteuerbar sind. Die Steuerungsvorrichtung könnte beispielsweise in einer Öffnung 40 im Trägerelement 20 angeordnet werden. Die Steuerungsvorrichtung wird vorzugsweise über eine Stromversorgung mit elektrischer Energie versorgt und steht mit den optischen Mitteln 1, 2 entsprechend in Verbindung. Über die Steuerungsvorrichtung ist der Zustand, Form, Intensität und/oder Farbe der Lichtscheine 5, 6 steuerbar.

Besonders bevorzugt umfasst die Beleuchtungseinheit B weiter ein mit der Steuerungseinheit in Verbindung stehender Helligkeitssensor 23 zur Erfassung der Helligkeit in einem Raum, in dem die Montageeinrichtung positioniert ist. Der Helligkeitssensor 23 wird bevorzugter Weise hinter der Abdeckung 7 angeordnet. In der Figur 5 wird der Helligkeitssensor 23 gezeigt. Der Helligkeitssensor 23 erfasst die Helligkeit des Raumes durch die Abdeckung 7 hindurch.

Weiter umfasst die Beleuchtungseinheit B vorzugsweise ein mit der Steuerungseinheit in Verbindung stehender Anwesenheitssensor. Der Anwesenheitssensor umfasst die Anwesenheit einer Person im Raum. Vorzugsweise ist der Anwesenheitssensor ebenfalls hinter der Abdeckung 7 angeordnet.

**BEZUGSZEICHENLISTE**

| | | | |
|---|---|---|---|
| 1 | erstes optisches Mittel | | Befestigungselemente |
| 2 | zweites optisches Mittel | 30 | Montagegestell |
| 3 | Lichtquelle | 31 | Dekorelement |
| 4 | Lichtquelle | 32 | Anschlusskabel |
| 5 | erster Lichtschein | 33 | Seitenabdeckung |
| 6 | zweiter Lichtschein | 34 | Seitenteile |
| 7 | Abdeckung | 35 | Kabel |
| 8 | erster flächiger Bereich | 36 | u-profilartiger Abschnitt |
| 9 | zweiter flächiger Bereich | 37 | Abschnitt |
| 10 | Lichtleiter | 38 | Führungen |
| 11 | Einkoppelstelle | 39 | Gegenstücke |
| 12 | Auskoppelstelle | 40 | Öffnung |
| 13 | vordere Mantelfläche | 41 | Betätigungstaste |
| 14 | hintere Mantelfläche | 42 | Betätigungstaste |
| 15 | Reflektor | 43 | Befestigungszapfen |
| 16 | Reflektor | 44 | Laschen |
| 17 | Reflektoroberfläche | | |
| 18 | Lagerungselement | | |
| 19 | Deckel | | |
| 20 | Trägerelement | | |
| 21 | Aufnahmestellen | | |
| 22 | Verschalungselement | | |
| 23 | Helligkeitssensor | | |
| 24 | Rückseite | | |
| 25 | Vorderseite | | |
| 26 | Montageeinrichtung | | |
| 27 | Wand | | |
| 28 | Boden | | |
| 29 | Anschlussrohre / | | |

## Patentansprüche

1. Montageeinrichtung (26) für einen Sanitärkörper umfassend ein Montagegestell (30) zur Aufnahme des Sanitärkörpers und eine mit dem Montagegestell in Verbindung stehende Beleuchtungseinheit (B), welche ein erstes optisches Mittel (1) mit mindestens einer Lichtquelle (3) zur Bereitstellung eines erstens Lichtscheins (5) und mindestens ein zweites optisches Mittel (2) mit mindestens einer Lichtquelle (4) zur Bereitstellung eines zweiten Lichtscheins (6) umfasst, wobei die besagten Lichtscheine (5, 6) von der Montageinrichtung (26) abgebbar sind,
wobei die Beleuchtungseinheit (B) eine transparente oder transluzente Abdeckung (7) umfasst, wobei die optischen Mittel (1, 2) durch die Abdeckung (7) verdeckt sind und die Lichtscheine (5, 6) durch die Abdeckung (7) abgebbar sind, wobei sich die Abdeckung (7) entlang einer Längsrichtung (L) erstreckt und flächige Bereiche (8, 9) aufweist, wobei das erste optische Mittel (1) im Bereich eines ersten flächigen Bereich (8) angeordnet ist, über welchen ausschliesslich oder hauptsächlich der erste Lichtschein (5) abgegebbar ist und wobei das zweite optische Mittel (2) im Bereich eines zweiten flächigen Bereich (9) angeordnet ist, über welchen ausschliesslich oder hauptsächlich der zweite Lichtschein (6) abgegebbar ist, wobei die flächigen Bereiche (8, 9) winklig zueinander stehen
und
wobei die Montageeinrichtung weiter einen Deckel (19) umfasst, welcher mit einer Oberseite des Montagegestells mit dem Montagegestell verbindbar ist, **dadurch gekennzeichnet, dass** der Deckel (19) ein Trägerelement (20) mit Aufnahmestellen (21) zur Aufnahme der Beleuchtungseinheit (B) bzw. der optischen Mittel (1, 2) und ein mit dem Trägerelement (20) verbindbares Verschalungselement (22) aufweist.

2. Montageeinrichtung nach Anspruch 1, **dadurch gekennzeichnet, dass** das erste optische Mittel (1) derart zum zweiten optischen Mittel (2) angeordnet ist, dass sich der erste Lichtschein (5) und der zweite Lichtschein (6) teilweise, insbesondere nur teilweise, überlagern oder dass der erste Lichtschein (5) neben dem zweiten Lichtschein (6) liegt.

3. Montageeinrichtung nach Anspruch 1 oder 2, **dadurch gekennzeichnet, dass** im eingebauten Zustand der zweite flächige Bereiche (9) in der Vertikalen und der erste flächige Bereich (8) geneigt zur Vertikalen verläuft.

4. Montageeinrichtung nach einem der vorhergehenden Ansprüche, **dadurch gekennzeichnet, dass** das erste optische Mittel (1) ein Lichtleiter (10) mit mindestens einer Einkoppelstelle (11) und mindestens einer Auskoppelstelle (12) umfasst, wobei die Lichtquelle (3) Licht über die Einkoppelstelle (11) in den Lichtleiter (10) einkoppelt und Licht über die Auskoppelstelle (11) zur Bereitstellung des ersten Lichtscheins (5) auskoppelt.

5. Montageeinrichtung nach Anspruch 4, **dadurch gekennzeichnet, dass** der Lichtleiter (10) stabförmig mit zwei Stirnseiten und mindestens einer vorderen Mantelfläche (13) sowie einer hinteren Mantelfläche (14) ausgebildet ist, wobei die Stirnseite die Einkoppelstelle (11) darstellt und wobei auf der vorderen und/oder hinteren Mantelfläche mindestens eine, vorzugsweise mehrere Auskoppelstellen (12), vorhanden sind, wobei die mehreren Auskoppelstellen (12) durch auf den Lichtleiter (10) aufgedruckte opake Bereiche getrennt voneinander sind bzw. definiert werden.

6. Montageeinrichtung nach Anspruch 4 oder 5, **dadurch gekennzeichnet, dass** die vordere Mantelfläche (13) zur Abdeckung (7) gerichtet ist, und dass bei Vorhandensein der Auskoppelstellen (12) auf der hinteren Mantelfläche (14) parallel zum Lichtleiter (10) gegenüber dessen hinteren Mantelfläche (14) ein Reflektor (15) angeordnet ist, welcher Licht, das über die hintere Mantelfläche (14) austritt, zum Lichtleiter (10) hin reflektiert.

7. Montageeinrichtung nach einem der Ansprüche 4 bis 6, **dadurch gekennzeichnet, dass** sich der Lichtleiter (10) im Wesentlichen über die gesamte Breite der Montageeinrichtung erstreckt.

8. Montageeinrichtung nach einem der vorhergehenden Ansprüche, **dadurch gekennzeichnet, dass** das zweite optische Mittel (2) einen Reflektor (16) mit einer Reflektoroberfläche (17) umfasst, wobei die zweite Lichtquelle (4) das Licht auf die Reflektoroberfläche (17) abgibt, welche dann den zweiten Lichtschein (6) bereitstellt.

9. Montageeinreichung nach einem der Ansprüche 4 bis 8, **dadurch gekennzeichnet, dass** der Reflektor (16) des zweiten optischen Mittels (2) in seiner Länge entlang der Längsrichtung (L) gesehen kürzer ist als der Lichtleiter (10).

10. Montageeinrichtung nach einem der vorhergehenden Ansprüche, **dadurch gekennzeichnet, dass** der Lichtleiter (10) hinter dem ersten flächigen Bereich (8) und der Reflektor (16) des zweiten optischen Mittels (2) hinter dem zweiten flächigen Bereich (9) angeordnet ist, wobei der Lichtleiter in den ersten flächigen Bereich (8) und der Reflektor in den zweiten flächigen Bereich (9) abstrahlen.

11. Montageeinrichtung nach einem der vorhergehenden Ansprüche, **dadurch gekennzeichnet, dass** die Beleuchtungseinheit (B) weiter ein Lagerungselement (18) umfasst, wobei das erste optische Mittel (1) und/oder das zweite optische Mittel (2) und/oder die Abdeckung (7) am Lagerungselement (18) gelagert ist, wobei das Lagerungselement (18) vorzugsweise die Gestalt eines sich in Längsrichtung (L) erstreckenden Profils aufweist und mit der Abdeckung (7) abschnittsweise in einem flächigen Verbund steht.

12. Montageeinrichtung nach einem der vorhergehenden Ansprüche, **dadurch gekennzeichnet, dass** das erste optische Mittel (1) und die Abdeckung (7) und ggf. das Lagerungselement (18) eine Einheit bilden, welche mit den Aufnahmestellen (21) des Trägerelementes (20) verbindbar ist und/oder dass der Reflektor (16) des zweiten optischen Mittels (2) mit den Aufnahmestellen (21) des Trägerelementes (20) verbindbar ist.

13. Montageeinrichtung nach einem der vorhergehenden Ansprüche, **dadurch gekennzeichnet, dass** die Beleuchtungseinheit (B) weiter eine Steuerungsvorrichtung umfasst, mit welcher die optischen Mittel ansteuerbar sind, wodurch Zustand, Form, Intensität und/oder Farbe der Lichtscheine steuerbar sind und dass die Beleuchtungseinheit (B) weiter ein mit der Steuerungseinheit in Verbindung stehender Helligkeitssensor (23) zur Erfassung der Helligkeit in einem Raum umfasst, welcher Helligkeitssensor (23) hinter der Abdeckung (7) angeordnet ist und/oder dass die Beleuchtungseinheit (B) weiter ein mit der Steuerungseinheit in Verbindung stehender Anwesenheitssensor umfasst, welcher die Anwesenheit einer Person im Raum erfasst und vorzugsweise hinter der Abdeckung (7) angeordnet ist.

14. Montageeinrichtung nach einem der vorhergehenden Ansprüche, **dadurch gekennzeichnet**, **dadurch gekennzeichnet,**
**dass** die Montageeinrichtung eine Rückseite (24) und eine Vorderseite (25) aufweist, wobei die Rückseite (24) im eingebauten Zustand gegen eine in der Vertikalen verlaufende Wand gerichtet ist, wobei der erste Lichtschein (5) und der zweite Lichtschein (6) gegen die Wand gerichtet sind, und/oder
**dass** die Montageeinrichtung mindestens ein Anschlussrohr und/oder mindestens ein Befestigungselement (29) für den Anschluss mindestens eines Sanitärkörpers an die Montageeinrichtung (26) umfasst.

15. Anordnung umfassend eine Montageeinrichtung nach einem der vorhergehenden Ansprüche und ein mit der Montageeinrichtung in Verbindung stehende Sanitärkörper, insbesondere eine Klosettschüssel, ein Urinal oder ein Waschtisch, wobei der Sanitärkörper vorzugsweise über das mindestens eine Befestigungselement (29) und/oder das mindestens eine Anschlussrohr mit der Montageeinrichtung in Verbindung steht.

## Claims

1. Mounting device (26) for a sanitary element comprising a mounting frame (30) to hold the sanitary element and a lighting unit (B) connected to the mounting frame, which lighting unit comprises a first optical means (1) having at least one light source (3) for providing a first glow of light (5) and at least one second optical means (2) having at least one light source (4) for providing a second glow of light (6), wherein the said glows of light (5, 6) can be output from the mounting device (26), wherein the lighting unit (B) comprises a transparent or translucent covering (7), where the optical means (1, 2) are concealed by the covering (7) and the glows of light (5, 6) can be output through the covering (7), wherein the covering (7) extends along a longitudinal direction (L) and has flat areas (8, 9), the first optical means (1) being arranged in the region of a first flat area (8), via which the first glow of light (5) can be exclusively or primarily output, and the second optical means (2) being arranged in the region of a second flat area (9), via which the second glow of light (6) can be output exclusively or primarily, the flat areas (8, 9) being at an angle to each other
and wherein the mounting device further comprises a cover (19), which can be connected to the mounting frame via an upper side of the mounting frame, **characterized in that** the cover (19) has a carrier element (20) having holding points (21) to hold the lighting unit (B) or the optical means (1, 2) and a casing element (22) that can be connected to the carrier element (20).

2. Mounting device according to Claim 1, **characterized in that** the first optical means (1) is arranged in relation to the second optical means (2) such that the first glow of light (5) and the second glow of light (6) overlap partly, in particular only partly, or that the first glow of light (5) lies beside the second glow of light (6).

3. Mounting device according to one of claims 1 or 2, **characterized in that** the second flat area (9) runs vertically when installed and the first flat area (8) runs at an angle to the vertical.

4. Mounting device according to one of the preceding claims, **characterized in that** the first optical means (1) comprises an optical waveguide (10) having at least one input coupling point (11) and at least one output coupling point (12), the light source (3) coupling light into the optical waveguide (10) via the input coupling point (11) and coupling light out via the output coupling point (12) to provide the first glow of light (5).

5. Mounting device according to Claim 4, **characterized in that** the optical waveguide (10) is formed to be rod-like with two ends and at least a front outer surface (13) and a rear outer surface (14), the end representing the input coupling point (11) and there being at least one output coupling point (12), preferably multiple output coupling points (12), on the front and/or rear outer surface, the multiple output coupling points (12) being separated from one another and are defined by opaque regions printed onto the optical waveguide (10).

6. Mounting device according to Claim 4 or 5, **characterized in that** the front outer surface (13) is aimed towards the covering (7) and **in that**, if the output coupling points (12) are present on the rear outer surface (14), a reflector (15) is arranged parallel to the optical waveguide (10) and opposite the rear outer surface (14) of the latter, which reflector reflects light which emerges via the rear outer surface (14) towards the optical waveguide (10).

7. Mounting device according to one of Claims 4 to 6, **characterized in that** the optical waveguide (10) extends substantially over the entire width of the mounting device.

8. Mounting device according to one of the preceding claims, **characterized in that** the second optical means (2) comprises a reflector (16) having a reflector surface (17), the second light source (4) outputting the light onto the reflector surface (17), which then provides the second glow of light (6).

9. Mounting device according to one of Claims 4 to 8, **characterized in that** the reflector (16) of the second optical means (2) is shorter in its length than the optical waveguide (10), as viewed along the longitudinal direction (L) .

10. Mounting device according to one of the preceding claims, **characterized in that** the optical waveguide (10) is arranged behind the first flat area (8) and the reflector (16) of the second optical means (2) is arranged behind the second flat area (9), the optical waveguide shining into the first flat area (8) and the reflector shining into the second flat area (9).

11. Mounting device according to one of the preceding claims, **characterized in that** the lighting unit (B) further comprises a supporting element (18), the first optical means (1) and/or the second optical means (2) and/or the covering (7) being mounted on the supporting element (18), the supporting element (18) preferably having the shape of a profile extending in the longitudinal direction (L) and, in some sections, being in a flat combination with the covering (7).

12. Mounting device according to one of the preceding claims, **characterized in that** the first optical means (1) and the covering (7) and, if appropriate, the supporting element (18) form a unit, which can be connected to the holding points (21) of the carrier element (20), and/or **in that** the reflector (16) of the second optical means (2) can be connected to the holding points (21) of the carrier element (20) .

13. Mounting device according to one of the preceding claims, **characterized in that** the lighting unit (B) further comprises a control device, with which the optical means can be controlled, by which means state, shape, intensity and/or colour of the glows of light can be controlled, and **in that** the lighting unit (B) further comprises a brightness sensor (23), connected to the control unit, for detecting the brightness in a room, which brightness sensor (23) is arranged behind the covering (7), and/or **in that** the lighting unit (B) further comprises a presence sensor, connected to the control unit, which detects the presence of a person in the room and is preferably arranged behind the covering (7).

14. Mounting device according to one of the preceding claims, **characterized in that** the mounting device has a rear side (24) and a front side (25), the rear side (24), when installed, being aimed towards a wall running vertically, the first glow of light (5) and the second glow of light (6) being aimed towards the wall, and/or
**in that** the mounting device comprises at least one connecting pipe and/or at least one fixing element (29) for the connection of at least one sanitary element to the mounting device (26).

15. Arrangement comprising a mounting device according to one of the preceding claims and a sanitary element connected to the mounting device, in particular a toilet bowl, a urinal or a wash basin, the sanitary element preferably being connected to the mounting device via the at least one fixing element (29) and/or the at least one connecting pipe.

## Revendications

1. Installation de montage (26) pour un corps sanitaire comprenant un cadre de montage (30) pour recevoir le corps sanitaire et une unité d'éclairage (B) qui est reliée au cadre de montage, laquelle comprend un premier moyen optique (1) avec au moins une source de lumière (3) pour mettre à disposition une première lueur (5) et au moins un deuxième moyen optique (2) avec au moins une source de lumière (4) pour mettre à disposition un deuxième lueur (6), où lesdits deux lueurs (5, 6) peuvent être émises par l'installation de montage (26), où l'unité d'éclairage (B) comprend un couvercle transparent ou translucide (7), où les moyens optiques (1, 2) étant dissimulés par le recouvrement (7) et les lueurs (5, 6) peuvent être émises à travers le recouvrement (7), où le recouvrement (7) s'étend le long d'une direction longitudinale (L) et présente des zones planes (8, 9), où le premier moyen optique (1) est disposé dans la zone d'une première zone plane (8), à travers de laquelle exclusivement ou principalement la première lueur (5) peut être émise, et où le deuxième moyen optique (2) est disposé dans la zone d'une deuxième zone plane (9), à travers de laquelle exclusivement ou principalement la deuxième lueur (6) peut être émise, où les régions planes (8, 9) sont en angle les unes par rapport aux autres, et
où l'installation de montage comprend en outre un couvercle (19), lequel peut être relié au cadre de montage par un côté supérieur du cadre de montage, **caractérisée en ce que** le couvercle (19) présente un élément de support (20) avec des emplacements de réception (21) pour recevoir l'unité d'éclairage (B) respectivement des moyens optiques (1, 2) et un élément de coque (22) pouvant être relié à l'élément de support (20).

2. Installation de montage selon la revendication 1, **caractérisée en ce que** le premier moyen optique (1) est disposé de telle sorte par rapport au deuxième moyen optique (2), que la première lueur (5) et la deuxième lueur (6) se recouvrent partiellement, particulièrement uniquement partiellement, ou que la première lueur (5) se situe à côté de la deuxième lueur (6).

3. Installation de montage selon la revendication 1 ou 2, **caractérisée en ce que** dans l'état monté, la deuxième zone plane (9) s'étend en direction verticale et la première zone plane (8) s'étend de manière oblique par rapport à la direction verticale.

4. Installation de montage selon une des revendications précédentes, **caractérisée en ce que** le premier moyen optique (1) comporte un conduit de lumière (10) ayant au moins un emplacement de couplage (11) et au moins un emplacement de couplage (12), où la source de lumière (3) couple de la lumière à travers l'emplacement de couplage (11) dans le conduit de lumière (10) et découple de la lumière à travers l'emplacement de découplage (11) pour un mise à disposition de la première lueur (5).

5. Installation de montage selon la revendication 4, **caractérisée en ce que** le conduit de lumière (10) est formé en forme de tige ayant deux cotés frontaux et au moins une surface antérieure latérale (13) ainsi que une surface postérieur latérale (14), où la face frontale forme l'emplacement de couplage (11) et où sur la surface antérieure latérale et / ou postérieure au moins une, préférablement plusieurs emplacements de couplage (12) sont présents, où les plusieurs emplacements de couplage (12) sont séparés l'un de l'autre respectivement sont définis sur le conduit de lumière (10) par de zones imprimées.

6. Installation de montage selon la revendication 4 ou 5, **caractérisée en ce que** la surface latérale antérieure (13) est orientée vers le recouvrement (7) et que, en présence des emplacements de découplage (12) au niveau de la surface latérale postérieure (14), un réflecteur est disposé en parallèle au conduit de lumière (10) en face à la surface latérale postérieure de celle-ci (14), lequel reflète la lumière émise à travers la surface latérale postérieure (14) vers le conduit de lumière (10).

7. Installation de montage selon une des revendications 4 à 6, **caractérisée en ce que** le conduit de lumière (10) s'étend sensiblement à travers la largeur entière de l'installation de montage.

8. Installation de montage selon une des revendications précédentes, **caractérisée en ce que** le deuxième moyen optique (2) comporte un réflecteur (16) ayant une surface de réflexion (17) où la deuxième source de lumière (4) émet la lumière sur la surface de réflexion (17), laquelle fournit alors une deuxième lueur (6).

9. Installation de montage selon une des revendications 4 à 8, **caractérisée en ce que** le réflecteur (16) du deuxième moyen optique (2) est plus court dans sa longueur, vu le long de la direction longitudinale (L), que le conduit de lumière (10).

10. Installation de montage selon une des revendications précédentes, **caractérisée en ce que** le conduit de lumière (10) est disposé derrière la première zone plane (8) et le réflecteur (16) est disposé derrière la deuxième zone plane (9), où le conduit de lumière émet dans une première zone plane (8) et le réflecteur émet dans une deuxième zone plane (9).

11. Installation de montage selon une des revendications précédentes, **caractérisée en ce que** l'unité d'éclairage (B) comporte en outre un élément de palier (18), où le premier moyen optique (1) et / ou le deuxième moyen optique (2) et / ou le recouvrement (7) est monté au niveau de l'élément de palier (18), où l'élément de palier (18) présente préférablement la forme d'un profilé s'étendant en direction longitudinale (L) et est relié au recouvrement (7) par sections en liaison plane.

12. Installation de montage selon une des revendications précédentes, **caractérisée en ce que** le premier moyen optique (1) et le recouvrement (7) et éventuellement l'élément de palier (18) forment une unité, laquelle peut être reliée avec les emplacements de réception (21) de l'élément de support (20) et / ou que le réflecteur (16) du deuxième moyen optique (2) peut être relié avec les emplacements de réception (21) de l'élément de support (20).

13. Installation de montage selon une des revendications précédentes, **caractérisée en ce que** l'unité d'éclairage (B) comporte en outre un dispositif de commande, avec lequel les moyens optiques peuvent être commandés, selon quoi l'état, la forme, l'intensité et / ou la couleur de la lueur sont capables d'être commandées et que l'unité d'éclairage (B) comporte en outre un capteur de luminosité (23) relié à l'unité de commande pour la détermination de la luminosité dans un espace, lequel capteur du luminosité (23) est disposé derrière le recouvrement (7) et / ou que l'unité d'éclairage (B) comporte en outre un capteur de présence relié à l'unité de commande, lequel détermine la présence d'une personne dans l'espace et préférablement est disposé derrière le recouvrement (7).

14. Installation de montage selon une des revendications précédentes, **caractérisée en ce que**,
que l'installation de montage comporte un coté dorsal (24) et un côté frontal (25), où le côté dorsal (24) est orienté, dans son état monté, contre une paroi s'étendant dans la verticale, où la première lueur (5) et la deuxième lueur (6) sont orientées contre la paroi, et / ou que l'installation de montage comporte au moins un tuyau de raccord et / ou au moins un élément de fixation (29) pour le raccord d'au moins un corps sanitaire à l'installation de montage (26).

15. Arrangement comprenant une installation de montage selon une des revendications précédentes et un corps sanitaire étant relié à l'installation de montage, en particulier une cuvette de toilette, un urinoir ou un évier, où le corps sanitaire est préférablement relié avec l'installation de montage à travers l'au moins un l'élément de fixation (29) et / ou l'au moins un tuyau de raccordement.
